# EUROPÄISCHE PATENTSCHRIFT

(11) **EP 3 483 025 B1**
(45) Veröffentlichungstag und Bekanntmachung des Hinweises auf die Patenterteilung: **24.06.2020**
(21) Anmeldenummer: 18202498.4
(22) Anmeldetag: 25.10.2018
(51) Int. Cl.: B60W 50/08, B60W 10/02, B60W 10/04, B60W 10/184, B60W 30/18

(54) **VERFAHREN ZUM BETREIBEN EINES ANTRIEBSSTRANGES EINES IN EINER GENEIGTEN STELLUNG BEFINDLICHEN KRAFTFAHRZEUGES**
METHOD FOR OPERATING A DRIVE TRAIN OF A MOTOR VEHICLE LOCATED IN AN INCLINED POSITION
PROCÉDÉ DESTINÉ AU FONCTIONNEMENT D'UNE CHAÎNE CINÉMATIQUE D'UN VÉHICULE AUTOMOBILE SITUÉ DANS UNE POSITION INCLINÉE

(30) Priorität: 10.11.2017 DE 102017220099
(43) Veröffentlichungstag der Anmeldung: 15.05.2019
(73) Patentinhaber: ZF Friedrichshafen AG, 88046 Friedrichshafen (DE)
(72) Erfinder: Pilzweger, Hans, 94152 Neuhaus am Inn (DE); Stöbich, Alexander, 94110 Wegscheid (DE)
(74) Vertreter: ZF Friedrichshafen AG

(56) Entgegenhaltungen:
- DE-A1- 19 927 975
- DE-A1-102009 012 847
- DE-A1-102014 205 176
- DE-A1-102015 203 453

## Beschreibung

Die Erfindung betrifft ein Verfahren zum Betreiben eines Antriebsstranges eines in einer geneigten Stellung befindlichen Kraftfahrzeugs, insbesondere eines landwirtschaftlichen oder kommunalen Nutzfahrzeuges, wobei bei Betätigung einer durch zumindest einen Sensor überwachten Betriebsbremse zum Stillsetzen des Kraftfahrzeugs eine Verbindung zwischen einer Antriebsmaschine und mindestens einer Antriebsachse des Kraftfahrzeuges im Rahmen einer Funktion getrennt wird. Des Weiteren betrifft die Erfindung ein Steuergerät für einen Antriebsstrang eines Kraftfahrzeuges, ein Computerprogrammprodukt sowie einen dieses Computerprogrammprodukt aufweisenden Datenträger.

Bei Kraftfahrzeugen mit automatisierten Schaltgetrieben oder Automatikgetrieben findet üblicherweise auch bei fehlender Betätigung eines Fahrpedals durch den Fahrzeugführer eine Übertragung einer Antriebsbewegung von einer Antriebsmaschine des Kraftfahrzeuges zu der oder den Antriebsachsen des Kraftfahrzeuges statt, was dann trotz fehlender Betätigung des Fahrpedals eine Vorwärtsbewegung zur Folge hat. Um einen Stillstand des Kraftfahrzeuges zu realisieren, muss der Fahrzeugführer aktiv die jeweilige Betriebsbremse betätigen, was ein Arbeiten der Antriebsmaschine gegen die Betriebsbremse und damit auch einen höheren Kraftstoffverbrauch zur Folge hat.

Zur Vermeidung eines höheren Kraftstoffverbrauchs ist es bei Kraftfahrzeugen bekannt, im Rahmen einer jeweiligen Funktion gezielt eine Verbindung zwischen der Antriebsmaschine und der oder den Antriebsachsen des Kraftfahrzeuges zu trennen und damit die Vorwärtsbewegung des Kraftfahrzeuges gezielt zu unterbinden. Das Aktivieren und Deaktivieren der Funktion erfolgt in Abhängigkeit von der Betätigung der Betriebsbremse. Ein Sensor erfasst das Betätigen bzw. das Lösen der Betriebsbremse anhand eines Verstellweges eines Betätigungselementes der Betriebsbremse. Das Ansprechen des Sensors bei der Betätigung der Betriebsbremse erfolgt bereits nach einem kurzen Verstellweg des Betätigungselementes, um frühzeitig einen Bremsvorgang zu signalisieren. Das Lösen der Betriebsbremse führt somit nicht unmittelbar zur Deaktivierung der Funktion, so dass sich das in einer geneigten Stellung befindliche Kraftfahrzeug entsprechend der Neigung in eine vorwärts oder rückwärts gerichtete Bewegung setzen kann.

Aus der DE 601 18 830 T2 ist ein Verfahren bekannt, bei welchem eine Verbindung zwischen einer Antriebsmaschine eines Kraftfahrzeuges und einer Antriebsachse des Kraftfahrzeuges im Rahmen einer Funktion getrennt wird. Hierzu wird die Funktion aktiviert, wenn das Kraftfahrzeug stationär ist und eine Betätigung der Betriebsbremse durch einen Sensor festgestellt wird. Durch einen zusätzlichen Neigungssensor wird erfasst, ob sich das Kraftfahrzeug zudem in einer geneigten Stellung befindet. Dabei wird in Abhängigkeit von der Neigung und der gewählten Fahrtrichtung die Funktion aktiviert oder bleibt deaktiviert. Bei einem Vorliegen einer Neigung, die einen bestimmten Wert überschreitet, wird die Funktion nicht aktiviert, d.h., dass der Antriebsstrang des Kraftfahrzeugs nicht in einen Neutralzustand versetzt wird, in dem die Antriebsmaschine und die Antriebsachse voneinander getrennt sind, obwohl das Kraftfahrzeug bei betätigter Betriebsbremse in stationärem Zustand gehalten wird.

Aus der DE 10 2015 203 453 A1 ist Verfahren zur Unterstützung des Anfahrens eines Fahrzeugs an einer Steigung mit Berganfahrassistenz-System. Zunächst wird das in Bewegung befindliche Fahrzeug an einer Steigung abgebremst. Wenn das Fahrzeug sich dann im Stillstand befindet, wird der Motor bei weiterhin betätigtem Bremspedal automatisch durch ein Start-Stopp-System ausgeschaltet. Bevor oder nachdem das Fahrzeug sich im Stillstand befindet, wird weiterhin eine Leerlaufstufe im Getriebe eingelegt. Wenn das Bremspedal dann wieder gelöst wird, wird der Motor wieder eingeschaltet. Da der Antriebsstrang bei einem Nicht-Eingreifen des Berganfahrassistenz-Systems beim Anfahren nicht automatisch geschlossen wird, schlägt die DE 10 2015 203 453 A1 vor, den Bremsdruck zumindest teilweise und zeitweise zu halten, um so ein Zurückrollen des Fahrzeugs zu verhindern, bis ein Fahrer des Fahrzeugs den Antriebsstrang manuell geschlossen hat.

Aus der DE 10 2014 205 176 A1 ist ein Verfahren zum Betrieb eines Kraftfahrzeugs mit Start/Stopp-Funktion bekannt. Dabei wird ein Verbrennungsmotor des Kraftfahrzeugs mittels der Start/Stopp-Funktion gestoppt, insbesondere nach Betätigen eines Bremspedals des Kraftfahrzeugs. Weiterhin wird eine Straßenneigung an der Position des Kraftfahrzeugs ermittelt. Das Ermitteln der Straßenneigung erfolgt dabei mittels eines hierzu geeigneten Sensors eines ABS/ESP-Steuergeräts, eines anderen Lagesensors, eines Kraftstofffüllstandsensors oder aus Navigationsdaten. Anhand der ermittelten Straßenneigung kann nun wiederum ein Schwellenwert einer Betriebsbremse des Kraftfahrzeugs ermittelt werden. Bei der Betriebsgröße handelt es sich wahlweise um einen Bremsdruck oder eine Position eines Bremspedals des Kraftfahrzeugs. Je größer die Straßenneigung ist, desto größer ist auch der Schwellenwert. Wenn der Schwellenwert unterschritten wird, also wenn der Bremsdruck unter den Schwellenwert fällt oder die Position des Bremspedals unter den Schwellenwert verändert wird, dann wird der Verbrennungsmotor mittels der Start/Stopp-Funktion wieder gestartet.

Die DE 199 27 975 A1 beschreibt eine Vorrichtung und ein Verfahren zum automatischen Anlassen und Abstellen eines Fahrzeugmotors, um einen weichen Übergang aus einem Bremslösezustand in einen Antriebszustand des Fahrzeugs zu bewirken. Dazu ist ein Bremspedalbetätigungssensor vorgesehen, welcher eine Bremspedalstellung erfassen kann. Alternativ kann ein Hydraulikdrucksensor zur Bestimmung des Bremsdrucks verwendet werden. Weiterhin ist ein Fahrbahnneigungssensor vorgesehen, welcher eine Fahrbahnneigung erfassen kann. Eine ECU errechnet dann aus der erfassten Fahrbahnneigung eine zum Halten des Fahrzeugs an der Fahrbahnneigung erforderliche Bremskraft sowie eine der Bremskraft entsprechende Betätigungsgröße. Wenn die zum Halten des Fahrzeugs erforderliche Bremskraft aufgebracht wird und das Fahrzeug still steht, wird automatisch der Motor abgestellt. Sofern zu einem späteren Zeitpunkt festgestellt wird, dass das Bremspedal gelockert wurde und die aufgebrachte Bremskraft zwar kleiner ist, aber immer noch ausreichend zum Halten des Fahrzeugs ist, wird der Motor automatisch wieder gestartet.

Die DE 10 2009 012 847 A1 beschreibt ein Verfahren zum automatischen Abschalten und Starten einer Antriebseinheit. Ein Steuergerät überwacht einen erzeugten Bremsdruck bzw. ein erzeugtes Bremsmoment und schaltet die Antriebseinheit ab, wenn der Bremsdruck bzw. das Bremsmoment einen vorgegebenen Abschalt-Bremsdruckschwellenwert bzw. einen vorgegebenen Abschalt-Bremsmomentschwellenwert überschreiten. Der Abschalt-Bremsdruckschwellenwert bzw. der Abschalt-Bremsmomentschwellenwert setzen sich dabei zusammen aus einem vorgegebenen Stillstandsbremsdruck bzw. einem vorgegebenen Stillstandsbremsmoment sowie jeweils zuzüglich eines vorgegebenen Sicherheitsaufschlags. Das Antriebsaggregat wird automatisch wieder eingeschaltet, wenn der Bremsdruck bzw. das Bremsmoment einen vorgegebenen Einschalt-Bremsdruckschwellenwert bzw. einen vorgegebenen Einschalt-Bremsmomentschwellenwert unterschreiten.

Ausgehend vom vorstehend beschriebenen Stand der Technik ist es nun die Aufgabe der vorliegenden Erfindung, ein Verfahren zum Betreiben eines Antriebsstranges eines in einer geneigten Stellung befindlichen Kraftfahrzeuges zu realisieren, in dessen Rahmen eine automatische Trennung einer Verbindung zwischen einer Antriebsmaschine und mindestens einer Antriebsachse des Kraftfahrzeuges vollzogen werden kann, wobei eine unkontrollierte Bewegung des Kraftfahrzeugs aufgrund der Trennung der Verbindung vermieden wird.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe durch die technischen Merkmale des nebengeordneten Anspruchs 6. Die hierauf jeweils folgenden, abhängigen Ansprüche geben jeweils vorteilhafte Weiterbildungen der Erfindung wieder. Des Weiteren ist ein Computerprogrammprodukt sowie ein dieses aufweisender Datenträger Gegenstand der Ansprüche 8 und 9.

Gemäß der Erfindung wird bei einem Verfahren zum Betreiben eines Antriebsstranges eines in einer geneigten Stellung befindlichen Kraftfahrzeugs bei Betätigung einer durch zumindest einen Sensor überwachten Betriebsbremse zum Stillsetzen des Kraftfahrzeugs eine Verbindung zwischen einer Antriebsmaschine und mindestens einer Antriebsachse des Kraftfahrzeuges im Rahmen einer Funktion automatisch getrennt. Eine geneigte Stellung des Kraftfahrzeugs liegt vor, wenn es sich an einer Steigung oder einem Gefälle befindet.

Im Zuge der Funktion wird also eine Übertragung einer Antriebsbewegung von der Antriebsmaschine zu der mindestens einen Antriebsachse des Kraftfahrzeuges unterbrochen, wobei hierbei die Verbindung zu einer oder auch mehreren Antriebsachsen des Kraftfahrzeuges unterbrochen wird, je nachdem wie viele Antriebsachsen das Kraftfahrzeug aufweist. Hiervon umfasst sind auch geschleppte Achsen des Fahrzeugs, die mittels einer Zuschaltvorrichtung trieblich zuschaltbar sind. Insofern dient die Funktion einer Unterbindung des Vorwärtskriechens des Kraftfahrzeuges, wobei eine notwendige Bedingung für das automatische Auslösen der Funktion eine Betätigung der Betriebsbremse durch den Fahrzeugführer ist.

Bei der Antriebsmaschine handelt es sich im Rahmen der Erfindung insbesondere um eine Brennkraftmaschine, welche innerhalb des Antriebsstranges über ein zwischenliegendes Anfahrelement, ein Kraftfahrzeuggetriebe, sowie einem jeweiligen Achsgetriebe der jeweiligen Antriebsachse mit der jeweiligen Antriebsachse verbunden werden kann. Bei dem Kraftfahrzeug handelt es sich bevorzugt um ein kommunales oder landwirtschaftliches Nutzfahrzeug, wie insbesondere einen Ackerschlepper.

Die Erfindung umfasst nun die technische Lehre, dass ein zum Erreichen oder zur Aufrechterhaltung des Stillstands des Kraftfahrzeugs aufgebrachter maximaler Bremsdruck durch eine fortlaufende Messung eines von der Betriebsbremse aufgebrachten Bremsdruckes bestimmt und überwacht wird, wobei bei einem Unterschreiten des maximalen Bremsdruckes um einen vorgebbaren Druckdifferenzbetrag die Funktion automatisch deaktiviert und damit die Verbindung zwischen der Antriebsmaschine und der mindestens einen Antriebsachse automatisch wiederhergestellt wird. Dies ist dann der Fall, wenn sich das Kraftfahrzeug in einer geneigten Position befindet und die von der sich lösenden Betriebsbremse aufgebrachte Bremskraft nicht ausreicht, die Position des Kraftfahrzeugs zu halten, so dass es zu einer unkontrollierten Rollbewegung des Kraftfahrzeugs kommen kann. Eine zeitliche Verzögerung zwischen dem Lösen der Betriebsbremse und der Deaktivierung der Funktion aufgrund des Erkennens des beginnenden Lösens der Betriebsbremse zum Einleiten des Anfahrvorganges, wird dadurch kompensiert.

Sobald also gegenüber dem Zustand, der für die Aktivierung der Funktion zum Trennen der Verbindung zwischen Antriebsmaschine und der mindestens einen Antriebsachse gesorgt hat, ein Bremsdruck bestimmt wird, der die maximale Bremskraft, die zu dem Erreichen oder der Aufrechterhaltung durch die Betriebsbremse aufgebracht wurde, um den vorgebbaren Druckdifferenzbetrag unterschreitet, wird diese Funktion wieder deaktiviert und damit die Verbindung zwischen Antriebsmaschine und der mindestens einen Antriebsachse des Kraftfahrzeuges wiederhergestellt, obwohl eine vollständige Beendigung der Betätigung der Betriebsbremse noch nicht erkannt wurde.

Eine derartige Ausgestaltung eines Verfahrens zum Betreiben eines Antriebsstranges des in geneigter Stellung befindlichen Kraftfahrzeugs hat dabei den Vorteil, dass zu einem frühen Zeitpunkt erkannt wird, dass die Bremse gelöst werden soll und ein Anfahren erwünscht ist, so dass durch die Deaktivierung der Funktion eine unkontrollierte Bewegung entgegen der gewünschten Fahrtrichtung vermieden wird, indem der Anfahrvorgang eingeleitet wird. Die Dynamik des Anfahrvorgangs bei der Verwendung der durch die Betätigung der Betriebsbremse, insbesondere eines Bremspedals, angesteuerten Start/Stopp-Funktion wird verbessert.

Gegenüber dem Stand der Technik nutzt das erfindungsgemäße Verfahren die Funktion der automatischen Trennung auch dann, wenn sich das Kraftfahrzeug an einer Steigung befindet, wodurch das Potential zur Kraftsstoffeinsparung erhalten bleibt. Darüber hinaus lässt sich das Anfahren von Kraftfahrzeugen, insbesondere mit automatisierten Synchron- oder Teillastschaltgetrieben, komfortabler und sicherer gestalten.

Innerhalb eines Kraftfahrzeugantriebsstranges wird das erfindungsgemäße Verfahren bevorzugt durch ein Steuergerät geregelt, bei welchem es sich insbesondere um das Steuergerät eines im Antriebsstrang angeordneten Anfahrelements handelt. Dabei umfasst das Steuergerät eine Einrichtung zum Regeln einer Funktion zum Betreiben des Antriebsstranges des in einer geneigten Stellung befindlichen Kraftfahrzeugs, wobei die Einrichtung bei Betätigung einer durch zumindest einen Sensor überwachten Betriebsbremse zum Stillsetzen des Kraftfahrzeugs eine Verbindung zwischen einer Antriebsmaschine und mindestens einer Antriebsachse des Kraftfahrzeuges im Rahmen derer Funktion trennt. Weiterhin ist die Einrichtung zur Bestimmung eines zum Erreichen oder zur Aufrechterhaltung des Stillstands des Fahrzeugs aufgebrachten maximalen Bremsdruckes und zur Überwachung des Aufbringens des maximalen Bremsdruckes durch eine fortlaufende Messung eines von der Betriebsbremse aufgebrachten Bremsdrucks eingerichtet. Die Einrichtung ist dazu eingerichtet, die Funktion bei einem Unterschreiten des maximalen Bremsdrucks um einen vorgebbaren Druckdifferenzbetrag automatisch zu deaktivieren und damit die Verbindung zwischen der Antriebsmaschine und der mindestens einen Antriebsachse automatisch wiederherzustellen.

Entsprechend einer Ausführungsform der Erfindung wird die Betätigung der Betriebsbremse durch einen im Bremskreis der Betriebsbremse angeordneten Sensor erfasst. Ein im Bremskreis der pneumatisch oder hydraulisch betätigbaren Betriebsbremse angeordneter Drucksensor kann dabei der Bestimmung des jeweils aktuellen Bremsdrucks dienen. Das Detektieren eines Bremsdrucks kann zu einer Aktivierung der Funktion zum Trennen der Verbindung zwischen Antriebsmaschine und der mindestens einen Antriebsachse herangezogen werden.

Gemäß einer Weiterbildung der Erfindung kann die Betätigung der Betriebsbremse durch eine Überwachung eines Schaltzustands zumindest eines als Bremslichtschalter ausgeführten Sensors erfasst werden. Die Betätigung der Betriebsbremse wird im Rahmen der Erfindung insbesondere durch Beobachten des jeweiligen Schaltzustandes des oder der Bremslichtschalter überwacht. Handelt es sich bei dem Kraftfahrzeug um ein landwirtschaftliches oder kommunales Nutzfahrzeug, bei welchem Radbremsen der linken und der rechten Seite unabhängig voneinander betätigt werden können, um die Wendigkeit des Nutzfahrzeuges zu erhöhen, so wird die Betriebsbremse für die Aktivierung der Funktion nur dann als betätigt angesehen, wenn die Radbremsen beider Seiten betätigt sind. Bei einem Beobachten der Bremslichtschalter müssen dann in diesem Fall die Bremslichtschalter für beide Seiten des Kraftfahrzeugs eingeschaltet sein.

Bevorzugt kann der Druckdifferenzbetrag an den jeweils bestimmten maximalen Bremsdruck angepasst werden. Somit kann auf unterschiedliche Betriebssituationen, welche die Größenordnung des durch die Betriebsbremse aufgebrachten maximalen Bremsdruckes beeinflussen können, reagiert werden. Der maximal erforderliche Bremsdruck, um ein Kraftfahrzeug zum Stillstand zu bringen und zu halten, ist in der Ebene ein anderer als an einer Steigung. Weiterhin wird der maximal erforderliche Bremsdruck durch ein an das Kraftfahrzeug angehängten Anhänger oder ein Anbaugerät beeinflusst. Entsprechend kann der jeweilige Druckdifferenzbetrag in Relation hierzu angepasst werden, um einer ungewollten Deaktivierung der Funktion zu begegnen.

Im Sinne der Erfindung liegen Werte für den Druckdifferenzbetrag als parametrierbare Werte vor, d.h. diese sind vorab hinterlegt. Hierzu kann zumindest eine Kennlinie in dem Steuergerät hinterlegt werden. Bei einer Hinterlegung mehrerer Kennlinien kann die Möglichkeit einer Auswahl durch eine Bedienperson oder eine automatische, von einer Betriebsart des Kraftfahrzeugs, d.h. beispielsweise dem Mitführen eines Anhängers oder dergleichen, abhängige Auswahl vorgesehen sein.

Des Weiteren kann eine Auswahl des Druckdifferenzbetrags anhand einer in einer zumindest einer Tabelle hinterlegten Zuordnung zu unterschiedlichen sensorisch bestimmen maximalen Bremsdrücken durchgeführt werden. In der Tabelle sind verschiedene Werte für einen maximalen Bremsdruck jeweils einem spezifischen Druckdifferenzbetrag zugeordnet. Die Tabelle kann in Abhängigkeit von Fahrzeugtyp und der Betriebsart frei parametrierbar sein. Die Tabelle sieht eine statische Zuordnung eines Bremsdruckbereiches zu einem spezifischen Druckdifferenzbetrag vor. Die Zuordnung kann dabei durch die Auswahl der Größe des Bremsdruckbereiches grob oder fein abgestuft werden.

In Weiterbildung der Erfindung wird die Trennung und auch eine Wiederherstellung der Verbindung zwischen der Antriebsmaschine und der mindestens einen Antriebsachse des Kraftfahrzeuges durch ein zwischen der Antriebsmaschine und einem Kraftfahrzeuggetriebe sitzendes Anfahrelement vollzogen. Weiter bevorzugt handelt es sich bei dem Anfahrelement dann um eine Trennkupplung, durch welche die mechanische Verbindung zwischen Antriebsmaschine und Kraftfahrzeuggetriebe im geöffneten Zustand unterbrochen wird. Die Trennkupplung kann dabei als trockenlaufende oder auch als nasslaufende Reibungskupplung vorliegen. Alternativ dazu ist es aber auch denkbar, die Trennung der Verbindung zwischen Antriebsmaschine und Antriebsachse an einer anderen Stelle im Antriebsstrang vorzunehmen, beispielsweise durch gezielte Betätigung der Schalteinrichtung des Getriebes aus einer eingelegten Gangstufe in eine Neutralstellung.

Die erfindungsgemäße Lösung lässt sich auch als Computerprogrammprodukt verkörpern, welches, wenn es auf einem Prozessor eines Steuergeräts läuft, den Prozessor softwaremäßig anleitet, die zugeordneten erfindungsgegenständlichen Verfahrensschritte durchzuführen. In diesem Zusammenhang gehört auch ein computerlesbares Medium zum Gegenstand der Erfindung, auf dem ein vorstehend beschriebenes Computerprogrammprodukt abrufbar gespeichert ist.

Die Erfindung ist nicht auf die angegebene Kombination der Merkmale der nebengeordneten oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausführungsformen der Erfindung, die nachfolgend erläutert werden, sind in den Zeichnungen dargestellt. Es zeigt:
- Fig. 1: eine schematische Ansicht eines Antriebsstranges eines Kraftfahrzeuges;
- Fig. 2: ein Ablaufdiagramm eines Verfahrens zum Betreiben des Antriebsstranges aus Fig. 1, entsprechend einer bevorzugten Ausführungsform der Erfindung;
- Fig. 3: einen Kennlinienverlauf für einen Druckdifferenzbetrag; und
- Fig. 4: einen Verlauf eines Bremsdrucks über die Zeit vom Beginn eines Bremsvorgang bis zum Start eines Anfahrvorgangs.

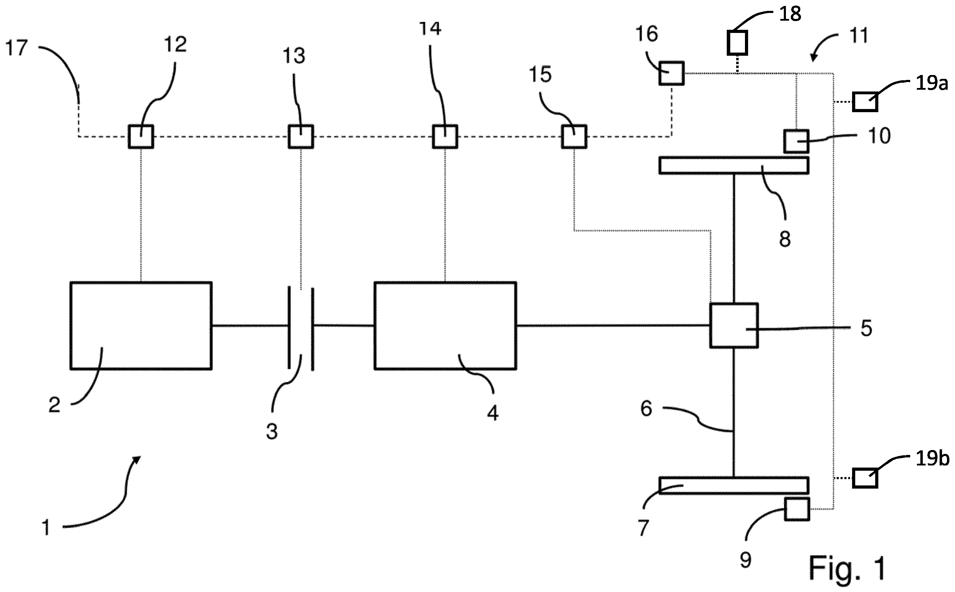

Fig. 1 zeigt eine schematische Ansicht eines Antriebsstranges 1 eines Kraftfahrzeuges, bei welchem es sich bevorzugt um ein landwirtschaftliches oder kommunales Nutzfahrzeug und weiter bevorzugt um einen Ackerschlepper handelt. Der Antriebsstrang 1 umfasst eine Antriebsmaschine 2, die als Brennkraftmaschine gestaltet ist und an einer Abtriebsseite über ein zwischenliegendes Anfahrelement 3 mit einem nachgeschalteten Kraftfahrzeuggetriebe 4 verbunden werden kann. Während das Anfahrelement 3 bevorzugt als trockenlaufende oder auch nasslaufende Reibungskupplung vorliegt, handelt es sich bei dem Kraftfahrzeuggetriebe 4 insbesondere um ein Schaltgetriebe.

Wie des Weiteren in Fig. 1 zu sehen ist, ist das Kraftfahrzeuggetriebe 4 abtriebsseitig mit einem Achsgetriebe 5 einer Antriebsachse 6 verbunden, wobei durch das Achsgetriebe 5 eine über das Kraftfahrzeuggetriebe 4 übersetzte Antriebsbewegung der Antriebsmaschine 2 auf zwei an der Antriebsachse 6 angeordnete Antriebsräder 7 und 8 verteilt wird. Jedem der Antriebsräder 7 und 8 ist jeweils eine Radbremse 9 bzw. 10 einer Betriebsbremse 11 des Kraftfahrzeuges zugeordnet, bei deren jeweiliger Betätigung das jeweilige Antriebsrad 7 bzw. 8 abgebremst wird. Dabei können die Antriebsräder 7 und 8 auch unabhängig voneinander abgebremst werden, um eine Wendigkeit des Kraftfahrzeuges zu erhöhen. Die Betätigung bzw. das Lösen der Betriebsbremse 11 führt zu einer Betätigung von einer Bremspedalmechanik zugeordneten Bremslichtschaltern 19a, 19b. Die Betätigungszustände der beiden Radbremsen 9 und 10 lassen sich anhand von Betätigungszuständen S_{R},_{Brems} und S_{L},_{Brems} des jeweiligen Bremslichtschalters 19a, 19b überprüfen.

Der Antriebsmaschine 2, dem Anfahrelement 3, dem Kraftfahrzeuggetriebe 4, dem Achsgetriebe 5 und auch der Betriebsbremse 11 sind jeweils je ein Steuergerät 12 bzw. 13 bzw. 14 bzw. 15 bzw. 16 zugeordnet, die mit weiteren - vorliegend nicht weiter dargestellten - Steuergeräten in ein Datenbussystem 17 des Kraftfahrzeuges eingebunden sind und untereinander kommunizieren. Dabei regelt das Steuergerät 12 die Antriebsmaschine 2, während mittels des Steuergerätes 13 ein automatisiertes Öffnen und Schließen des Anfahrelements 3 regelbar ist. Neben diesem automatisierten Betrieb des Anfahrelements 3 besteht aber zudem die Möglichkeit, ein manuelles Öffnen und Schließen des Anfahrelements 3 entsprechend der Vorgaben des Fahrzeugführers vorzunehmen, wobei zu diesem Zweck das Steuergerät 13 mit einem - vorliegend nicht weiter dargestellten - Kupplungspedal in Verbindung steht.

Das Steuergerät 14 ist dem Kraftfahrzeuggetriebe 4 zugeordnet und kann dieses nach Art eines automatisierten Schaltgetriebes regeln, wobei auch hier die Möglichkeit besteht, in einem manuellen Modus Schaltvorgänge entsprechend der Vorgaben des Fahrzeugführers durchzuführen. Schließlich ist das Steuergerät 15 dem Achsgetriebe 5 an der Antriebsachse 6 und das Steuergerät 16 der Betriebsbremse 11 sowie einem dem Bremskreis der Betriebsbremse 11 zugeordneten Drucksensor 18, der zur kontinuierlichen Erfassung eines Bremsdrucks p_{Brems} eingerichtet ist, zugeordnet.

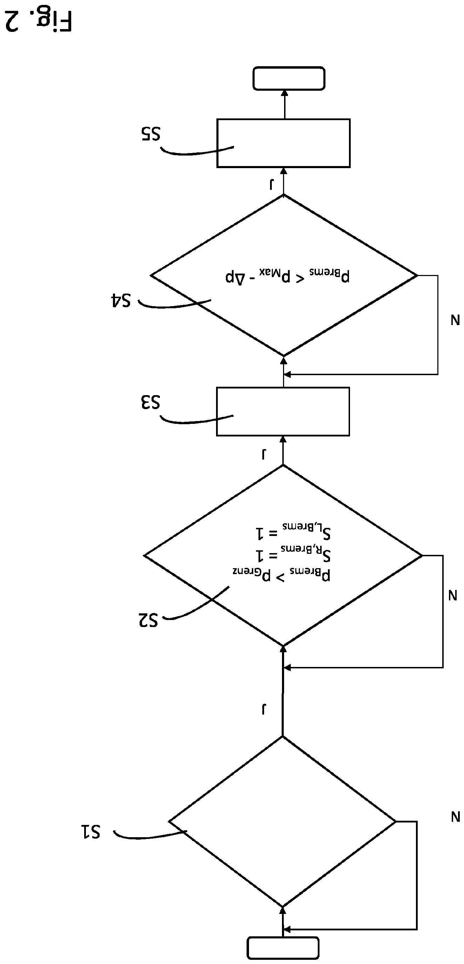

Als Besonderheit kann durch das Steuergerät 13 ein automatisiertes Öffnen und Schließen des Anfahrelements 3 im Rahmen einer Funktion verwirklicht werden, um durch Trennen der Verbindung zwischen der Antriebsmaschine 2 und dem Kraftfahrzeuggetriebe 4 ein Vorwärtskriechen des Kraftfahrzeuges zu unterbinden. Durch ein zeitnahes Wiederherstellen der Verbindung zwischen der Antriebsmaschine 2 und dem Kraftfahrzeuggetriebe 4 durch das Schließen des Anfahrelements 3 lässt sich, wenn sich das Kraftfahrzeug zu Beginn des Lösens der Betriebsbremse 11 in einer geneigten Stellung befindet, d.h. an einer Steigung oder einem Gefälle, eine ungewollte Bewegung entgegen der gewünschten Fahrtrichtung verhindern. Um frühzeitig zu erkennen, dass die Betriebsbremse 11 gelöst wird und ein Anfahren erwünscht ist, regelt das Steuergerät 13 das Anfahrelement 3 entsprechend dem im Ablaufdiagramm aus Fig. 2 dargestellten Verfahren:
Zu Beginn des Verfahrens wird in einem Schritt S1 zunächst abgefragt, ob die Funktion manuell durch den Fahrzeugführer deaktiviert wurde. Ist dies zu bejahen, so wird an den Anfang zurückgegangen und nichts weiter unternommen, bis eine Deaktivierung durch den Fahrzeugführer aufgehoben worden ist.

Ist das Ergebnis in Schritt S1 hingegen negativ, so wird zu einem Schritt S2 übergegangen, in welchem verschiedene Bedingungen abgefragt werden. So wird in dem Schritt S2 abgefragt, ob ein durch den Drucksensor 18 erfasster Bremsdruck p_{Brems} größer als ein Grenzwert p_{Grenz} ist, was dem Betätigen der Betriebsbremse 11 entspricht. Dabei kann der Grenzwert p_{Grenz} auch den Wert Null annehmen. Alternativ oder ergänzend werden in dem Schritt S2 noch die Betätigungszustände der beiden Radbremsen 9 und 10 abgefragt, wobei hierzu der jeweilige Betätigungszustand S_{R},_{Brems} und S_{L},_{Brems} des jeweiligen Bremslichtschalters 19a, 19b überprüft wird. Ist die in Schritt S2 erforderliche Bedingung erfüllt, so wird zu einem Schritt S3 übergegangen, während im zu verneinenden Fall vor Schritt S2 zurückgesprungen wird.

In Schritt S3 wird das Anfahrelement 3 automatisiert geöffnet und damit die Verbindung zwischen Antriebsmaschine 2 und Kraftfahrzeuggetriebe 4 getrennt. Weiterhin wird in dem Schritt S3 ein maximaler Bremsdruck p_{Max} bestimmt, der aufgebracht wurde, um das Kraftfahrzeug zum Stillstand zu bringen. Die Bestimmung des maximalen Bremsdrucks p_{Max} erfolgt dabei durch eine kontinuierliche Erfassung des Bremsdrucks p_{Brems}, der bis zum Erreichen oder im Anschluss zur Aufrechterhaltung des Stillstands des Kraftfahrzeugs von der Betriebsbremse 11 aufgebracht wird. Nach durchgeführter Bestimmung des maximalen Bremsdrucks p_{Max} wird zu einem Schritt S4 übergegangen.

In Schritt S4 wird überprüft, ob der zuvor bestimmte maximale Bremsdruck p_{Max} um einen vorgebbaren Druckdifferenzbetrag Δp unterschritten wird. Liegt eine Unterschreitung vor, so wird zu einem Schritt S5 übergegangen, während im zu verneinenden Fall vor Schritt S4 zurückgesprungen wird. Solange der maximale Bremsdruck p_{Max} nicht um den Druckdifferenzbetrag Δp unterschritten wird, ist der von der Betriebsbremse 11 aufgebracht Bremsdruck p_{Brems} hinreichend groß, um das Kraftfahrzeug in seiner gegenwärtigen Stillstandposition zu halten. Entsprechend wird daraus abgeleitet, dass ein Anfahrwunsch nicht vorliegt. Das Unterschreiten des maximalen Bremsdrucks p_{Max} um den vorgebbaren Druckdifferenzbetrag Δp wird als das beginnende Lösen der Betriebsbremse 11 durch Entlastung eines Bremspedals interpretiert, um den Anfahrvorgang einzuleiten.

In Schritt S5 wird das Anfahrelement 3 automatisiert geschlossen und damit die Verbindung zwischen Antriebsmaschine 2 und Kraftfahrzeuggetriebe 4 wiederhergestellt. Durch das frühzeitige Einleiten des Anfahrvorgangs wird im Folgenden eine ungewollte Bewegung des, insbesondere in einer geneigten Stellung befindlichen, Kraftfahrzeugs entgegen der gewünschten Fahrtrichtung verhindert. Im Anschluss an Schritt S5 ist die Funktion dann beendet.

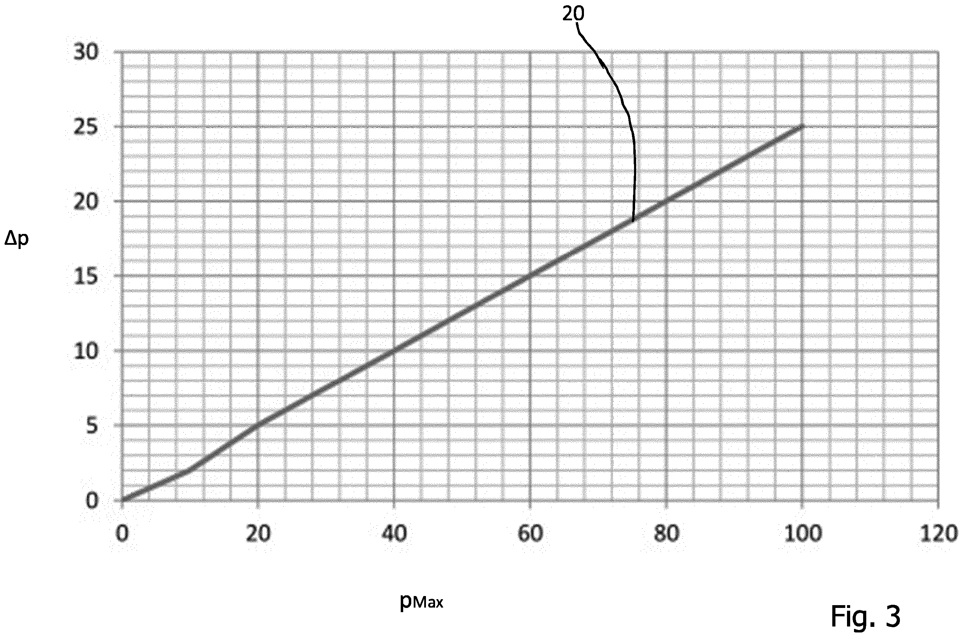

Fig. 3 zeigt einen beispielhaften Kennlinienverlauf 20 für den Druckdifferenzbetrag Δp, der verfahrensgemäß der Entscheidung im Schritt S4 zugrunde gelegt wird, ob ein Lösen der Betriebsbremse 11 vorliegt. In dem Steuergerät 13 können eine oder mehrere dieser Kennlinien 20 hinterlegt sein. Denkbar ist auch die Hinterlegung einer frei parametrierbaren Tabelle, um eine Anpassung zwischen dem jeweils sensorisch bestimmten maximalen Bremsdruck p_{Max} und dem Druckdifferenzbetrag Δp zu ermöglichen.

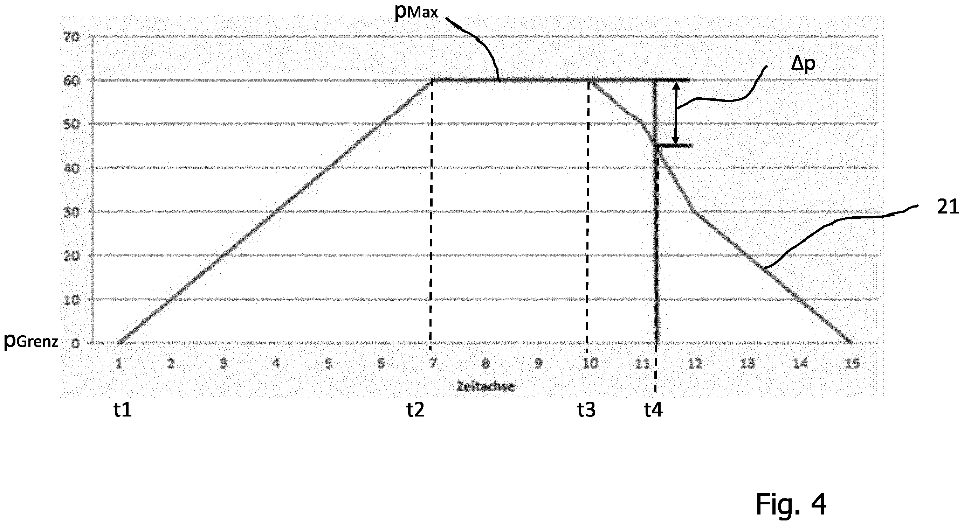

In Fig. 4 ist ein beispielhafter Bremsdruckverlauf 21 eines durch den Drucksensor 18 erfassten Bremsdrucks über die Zeit vom Beginn eines Bremsvorgangs bis zum Start eines Anfahrvorgangs dargestellt. Mit dem Passieren des Grenzwertes p_{Grenz} in einem Zeitpunkt t1 der im dargestellten Ausführungsbeispiel einem Bremsruck von Null bar entspricht, wodurch die Bedingung im Schritt S2 erfüllt ist, wird der weitere des Bremsdrucks p_{Brems} während des Bremsvorganges erfasst. Mit dem Erreichen des Stillstands des Kraftfahrzeugs im Zeitpunkt t2 wird der maximale Bremsdruck p_{Max} bestimmt, der durch die Betriebsbremse 11 aufgebracht wurde bzw. wird, um das Kraftfahrzeug zum Stillstand zu bringen bzw. zu halten. Das Lösen der Betriebsbremse 11 im Zeitpunkt t3 zu einem Absinken des Bremsdrucks p_{Brems}. Unterschreitet der Bremsdruck p_{Brems} den zuvor bestimmten maximalen Bremsdruck p_{Max} um den Druckdifferenzbetrag Δp, so wird gemäß dem Schritt S5 das Anfahrelement 3 automatisiert geschlossen und damit die Verbindung zwischen der Antriebsmaschine 2 und dem Kraftfahrzeuggetriebe 4 wiederhergestellt.

### Bezugszeichen

- 1: Antriebsstrang
- 2: Antriebsmaschine
- 3: Anfahrelement
- 4: Kraftfahrzeuggetriebe
- 5: Achsgetriebe
- 6: Antriebsachse
- 7: Antriebsrad
- 8: Antriebsrad
- 9: Radbremse
- 10: Radbremse
- 11: Betriebsbremse
- 12: Steuergerät
- 13: Steuergerät
- 14: Steuergerät
- 15: Steuergerät
- 16: Steuergerät
- 17: Datenbussystem
- 18: Drucksensor
- 19a,19b: Bremslichtschalter
- 20: Druckdifferenzkennlinie
- 21: Bremsdruckverlauf
- p_{Brems}: Bremsdruck
- PGrenz: Grenzwert
- p_{Max}: Maximaler Bremsdruck
- Δp: Druckdifferenzbetrag
- S_{R},_{Brems}: Betätigungszustand Bremslichtschalter
- S_{L},_{Brems}: Betätigungszustand Bremslichtschalter

## Patentansprüche

1. Verfahren zum Betreiben eines Antriebsstranges (1) eines in einer geneigten Stellung befindlichen Kraftfahrzeugs, insbesondere eines landwirtschaftlichen oder kommunalen Nutzfahrzeuges, wobei bei Betätigung einer durch zumindest einen Sensor (18) überwachten Betriebsbremse (11) zum Stillsetzen des Kraftfahrzeugs eine Verbindung zwischen einer Antriebsmaschine (2) und mindestens einer Antriebsachse (6) des Kraftfahrzeuges im Rahmen einer Funktion automatisch getrennt wird, **dadurch gekennzeichnet, dass** ein zum Erreichen oder zur Aufrechterhaltung des Stillstands des Kraftfahrzeugs aufgebrachter maximaler Bremsdruck (p_{Max}) durch eine fortlaufende Messung eines von der Betriebsbremse (11) aufgebrachten Bremsdrucks (p_{Brems}) bestimmt und überwacht wird, wobei bei einem Unterschreiten des maximalen Bremsdrucks (p_{Max}) um einen vorgebbaren Druckdifferenzbetrag (Δp) die Funktion automatisch deaktiviert und damit die Verbindung zwischen der Antriebsmaschine (2) und der mindestens einen Antriebsachse (6) automatisch wiederhergestellt wird und wobei der Druckdifferenzbetrag (Δp) an den jeweils bestimmten maximalen Bremsdruck (p_{Max}) angepasst wird.

2. Verfahren nach Anspruch 1, **dadurch gekennzeichnet, dass** die Betätigung der Betriebsbremse (11) durch einen dem Bremskreis der Betriebsbremse (11) zugeordneten Sensor (18) erfasst wird.

3. Verfahren nach Anspruch 1 oder 2, **dadurch gekennzeichnet, dass** die Betätigung der Betriebsbremse (11) durch eine Überwachung eines Betätigungszustands zumindest eines Bremslichtschalters (19a, 19b) erfasst wird.

4. Verfahren nach einem der Ansprüche 1 bis 3, **dadurch gekennzeichnet, dass** eine Auswahl des Druckdifferenzbetrags (Δp) anhand einer in einer Tabelle hinterlegten Zuordnung zu unterschiedlichen maximalen Bremsdrücken (p_{Max}) durchgeführt wird.

5. Verfahren nach einem der vorhergehenden Ansprüche, **dadurch gekennzeichnet, dass** die Trennung und auch eine Wiederherstellung der Verbindung zwischen der Antriebsmaschine (2) und der mindestens einen Antriebsachse (6) des Kraftfahrzeuges durch ein zwischen der Antriebsmaschine (2) und einem Kraftfahrzeuggetriebe (4) sitzendes Anfahrelement (3) vollzogen wird.

6. Steuergerät (13) für einen Antriebsstrang (1) eines Kraftfahrzeuges, insbesondere für ein Anfahrelement (3) des Antriebsstranges (1), umfassend eine Einrichtung zum Regeln einer Funktion zum Betreiben des Antriebsstranges (1) des in einer geneigten Stellung befindlichen Kraftfahrzeugs, wobei die Einrichtung bei Betätigung einer durch zumindest einen Sensor (18) überwachten Betriebsbremse (11) zum Stillsetzen des Kraftfahrzeugs eine Verbindung zwischen einer Antriebsmaschine (2) und mindestens einer Antriebsachse (6) des Kraftfahrzeuges im Rahmen der Funktion trennt,
**dadurch gekennzeichnet, dass** die Einrichtung zur Bestimmung eines zum Erreichen oder zur Aufrechterhaltung des Stillstands des Kraftfahrzeuges aufgebrachten maximaler Bremsdruck (p_{Max}) eingerichtet ist und das Bestehen des maximalen Bremsdrucks (p_{Max}) durch eine fortlaufende Messung eines von der Betriebsbremse (11) aufgebrachten Bremsdrucks (p_{Brems}) überwacht, dass die Einrichtung bei einem Unterschreiten des maximalen Bremsdrucks (p_{Max}) um einen vorgebbaren Druckdifferenzbetrag (Δp) die Funktion automatisch deaktiviert und damit die Verbindung zwischen der Antriebsmaschine (2) und der mindestens einen Antriebsachse (6) automatisch wiederhergestellt und wobei die Einrichtung dazu eingerichtet ist, den Druckdifferenzbetrag (Δp) an den jeweils bestimmten maximalen Bremsdruck (p_{Max}) anzupassen

7. Steuergerät (13) nach Anspruch 6, durch welches ein Verfahren nach einem oder mehreren der Ansprüche 2 bis 5 durchführbar ist.

8. Computerprogrammprodukt für ein Steuergerät (13) nach Anspruch 6 oder 7, durch welches ein Verfahren nach einem oder mehreren der Ansprüche 1 bis 5 durchführbar ist, wobei eine Routine zum Deaktivieren der Funktion durch entsprechende in einer Software hinterlegte Steuerungsbefehle umgesetzt ist.

9. Datenträger mit einem Computerprogrammprodukt nach Anspruch 8.

## Claims

1. Method for operating a drivetrain (1) of a motor vehicle, in particular of an agricultural or municipal vehicle, situated in an inclined position, wherein, when activating an operating brake (11) which for stopping the motor vehicle is monitored by at least one sensor (18), a connection between a drive machine (2) and at least one drive axle (6) of the motor vehicle is automatically separated in the context of a function, **characterized in that** a maximum brake pressure (p_{Max}) applied for achieving or for maintaining the stoppage of the motor vehicle is determined and monitored by continuously measuring a brake pressure (p_{Brake}) applied by the operating brake (11), wherein when undershooting the maximum brake pressure (p_{Max}) by a predefinable pressure differential value (Δp) the function is automatically deactivated and the connection between the drive machine (2) and the at least one drive axle (6) is thus automatically reinstated, and wherein the pressure differential value (Δp) is adapted to the respective maximum brake pressure (p_{Max}).

2. Method according to Claim 1, **characterized in that** the activation of the operating brake (11) is detected by a sensor (18) which is assigned to the brake circuit of the operating brake (11).

3. Method according to Claim 1 or 2, **characterized in that** the activation of the operating brake (11) is detected by monitoring an activation state of at least one brake light switch (19a, 19b).

4. Method according to one of Claim 1 to 3, **characterized in that** a selection of the pressure differential value (Δp) is carried out by means of an assignment to different maximum brake pressures (p_{Max}) that is stored in a table.

5. Method according to one of the preceding claims, **characterized in that** the separation and also a reinstatement of the connection between the drive machine (2) and the at least one drive axle (6) of the motor vehicle is performed by a start-up element (3) which sits between the drive machine (2) and a motor-vehicle transmission box (4).

6. Control apparatus (13) for a drivetrain (1) of a motor vehicle, in particular for a start-up element (3) of the drivetrain (1), comprising an installation for regulating a function for operating the drivetrain (1) of the motor vehicle situated in an inclined position, wherein the installation when activating an operating brake (11) which for stopping the motor vehicle is monitored by at least one sensor (18) in the context of the function separates a connection between a drive machine (2) and at least one drive axle (6) of the motor vehicle, **characterized in that** the installation is specified for determining a maximum brake pressure (p_{Max}) applied for achieving or for maintaining the stoppage of the motor vehicle, and monitors the existence of the maximum brake pressure (pMax) by continuously measuring a brake pressure (pBᵣₐₖₑ) applied by the operating brake (11), **in that** the installation when undershooting the maximum brake pressure (p_{Max}) by a predefinable pressure differential value (Δp) automatically deactivates the function, and the connection between the drive machine (2) and the at least one drive axle (6) is thus automatically reinstated, and wherein the installation is specified for adapting the pressure differential value (Δp) to the respective determined maximum brake pressure (p_{Max}).

7. Control apparatus (13) according to Claim 6, by way of which control apparatus (13) a method according to one or a plurality of Claims 2 to 5 is able to be carried out.

8. Computer program product for a control apparatus (13) according to Claim 6 or 7, by way of which computer program product a method according to one or a plurality of Claims 1 to 5 is able to be carried out, wherein a routine for deactivating the function is implemented by control commands which are stored in a software.

9. Data carrier having a computer program product according to Claim 8.

## Revendications

1. Procédé destiné à faire fonctionner une chaîne cinématique (1) d'un véhicule automobile se trouvant dans une position inclinée, en particulier d'un véhicule utilitaire agricole ou municipal, dans lequel, en cas d'actionnement d'un frein de service (11) surveillé par au moins un capteur (18) pour immobiliser le véhicule automobile, une connexion entre une machine d'entraînement (2) et au moins un arbre primaire (6) du véhicule automobile est coupée automatiquement dans le cadre d'une fonction, **caractérisé en ce qu'**une pression de freinage maximale (p_{Max}) développée pour atteindre ou maintenir l'immobilisation du véhicule automobile est déterminée par une mesure continue d'une pression de freinage (p_{Brems}) développée par le frein de service (11) et surveillée, dans lequel, en cas de soupassement de la pression de freinage maximale (p_{Max}) d'une quantité de différence de pression prédéfinissable (Δp), la fonction est désactivée automatiquement et donc la connexion entre la machine d'entraînement (2) et ledit au moins un arbre primaire (6) est rétablie automatiquement, et dans lequel la quantité de différence de pression (Δp) est adaptée à la pression de freinage maximale (p_{Max}) déterminée respectivement.

2. Procédé selon la revendication 1, **caractérisé en ce que** l'actionnement du frein de service (11) est détecté par un capteur (18) associé au circuit de freinage du frein de service (11).

3. Procédé selon la revendication 1 ou 2, **caractérisé en ce que** l'actionnement du frein de service (11) est détecté par une surveillance d'un état d'actionnement au moins d'un interrupteur de feu stop (19a, 19b).

4. Procédé selon l'une des revendications 1 à 3, **caractérisé en ce qu'**une sélection de la quantité de différence de pression (Δp) est effectuée à l'aide d'une affectation à différentes pressions de freinage maximales (p_{Max}), enregistrée dans un tableau.

5. Procédé selon l'une quelconque des revendications précédentes, **caractérisé en ce que** la séparation ainsi que le rétablissement de la connexion entre la machine d'entraînement (2) et ledit au moins un arbre primaire (6) du véhicule automobile sont exécutés par un élément de démarrage (3) situé entre la machine d'entraînement (2) et une boîte de vitesses de véhicule automobile (4) .

6. Contrôleur (13) pour une chaîne cinématique (1) d'un véhicule automobile, en particulier pour un élément de démarrage (3) de la chaîne cinématique (1), comprenant un dispositif permettant de réguler une fonction pour faire fonctionner la chaîne cinématique (1) du véhicule automobile se trouvant dans une position inclinée, dans lequel, en cas d'actionnement d'un frein de service (11) surveillé par au moins un capteur (18) pour immobiliser le véhicule automobile, le dispositif coupe une connexion entre une machine d'entraînement (2) et au moins un arbre primaire (6) du véhicule automobile dans le cadre de la fonction, **caractérisé en ce que** le dispositif est aménagé pour déterminer une pression de freinage maximale (p_{Max}) développée pour atteindre ou maintenir l'immobilisation du véhicule automobile et surveille la présence de la pression de freinage maximale (p_{Max}) par une mesure continue d'une pression de freinage (p_{Brems}) développée par le frein de service (11), **en ce que** le dispositif, en cas de soupassement de la pression de freinage maximale (p_{Max}) d'une quantité de différence de pression (Δp) prédéfinissable désactive automatiquement la fonction et rétablit donc automatiquement la connexion entre la machine d'entraînement (2) et l'arbre primaire (6), et dans lequel le dispositif est aménagé pour adapter la quantité de différence de pression (Δp) à la pression de freinage maximale (p_{Max}) déterminée respectivement.

7. Contrôleur (13) selon la revendication 6, permettant d'effectuer un procédé selon une ou plusieurs des revendications 2 à 5.

8. Produit de programme informatique pour un contrôleur (13) selon la revendication 6 ou 7, permettant d'effectuer un procédé selon une ou plusieurs des revendications 1 à 5, dans lequel une routine pour désactiver la fonction est mise en œuvre par des instructions de commande correspondantes, enregistrées dans un logiciel.

9. Support de données comprenant un produit de programme informatique selon la revendication 8.
